Europäisches Patentamt

European Patent Office

Office européen des brevets

(19)

(11) Veröffentlichungsnummer: **0 332 037 B1**

(12) **EUROPÄISCHE PATENTSCHRIFT**

(45) Veröffentlichungstag der Patentschrift:
04.09.91 Patentblatt 91/36

(51) Int. Cl.⁵: **B62D 61/12**

(21) Anmeldenummer: 89103558.6

(22) Anmeldetag: 01.03.89

(54) **Achsanhebevorrichtung.**

(30) Priorität: 05.03.88 DE 3807273

(43) Veröffentlichungstag der Anmeldung:
13.09.89 Patentblatt 89/37

(45) Bekanntmachung des Hinweises auf die
Patenterteilung:
04.09.91 Patentblatt 91/36

(84) Benannte Vertragsstaaten:
DE ES FR GB IT NL SE

(56) Entgegenhaltungen:
EP-A- 0 284 572
US-A- 2 742 301

(73) Patentinhaber: Bergische Achsenfabrik Fr.
Kotz & Söhne
Am Ohlerhammer
W-5276 Wiehl 1 (DE)

(72) Erfinder: Idel, Gerd
Stockheim 4
W-5223 Nümbrecht (DE)

(74) Vertreter: Patentanwälte Dipl.-Ing. Alex
Stenger Dipl.-Ing. Wolfram Watzke Dipl.-Ing.
Heinz J. Ring
Kaiser-Friedrich-Ring 70
W-4000 Düsseldorf 11 (DE)

## Beschreibung

Gegenstand der Erfindung ist eine Achsanhebevorrichtung für luftgefederte Achsen von Lastkraftwagen, mit den Merkmalen des Oberbegriffs des Anspruchs 1.

Aus der EP-A-0284572 ist eine gattungsgemäße Achsanhebevorrichtung bekannt, bei welcher der Hubbalg über eine Haltevorrichtung fest mit dem Fahrzeugrahmen verbunden ist. Eine zweite Haltevorrichtung ist am Achskörper derart befestigt, daß der Hubbalg diese im Bedarfsfall untergreifen kann und somit die Achse anhebt. Um ein Abrutschen des Hubbalges von der achsseitig befestigten Haltevorrichtung beim Anheben der Achse zu verbindern, ist ein kugelförmig ausgebildeter Pin an dieser angeordnet. Dieser Pin greift dann in eine entsprechende Mulde im Deckel des Hubbalges.

Der Hubbalg selbst ist bauartbedingt, ein vergleichsweise instabiles Bauteil und da die Achse nicht geradlinig, sondern kreisförmig, um den Rahmenhaltepunkt, angehoben wird, ist je nach Situation und Bodenbeschaffenheit, nicht gewährleistet, daß der Pin die Mulde des Hubbalges trifft. Das hat eine nicht exakte Führung der Achse oder möglicherweise ein Verkanten der Anlage zur Folge.

Ein zweiter Nachteil ist, daß durch die raumgreifende Ausgestaltung der Konstruktion diese Achsanhebevorrichtung nur an nachlaufenden Achsen oder an gezogenen Fahrzeugen verwendet werden kann, weil ansonsten eine Kollision mit der Kardanwelle eintreten würde.

Davon ausgehend liegt der Erfindung die **Aufgabe** zugrunde, eine verbesserte Achsanhebevorrichtung zu schaffen, die eine präzise Führung der Achse ermöglicht und die in beliebige Fahrzeugrahmen eingebaut und auch bei Vorlaufachsen Verwendung finden kann.

Diese Aufgabe wird erfindungsgemäß durch die Kennzeichmunden Merkmale des Anspruchs 1 gelöst.

Bei einer erfindungsgemäßen Achsanhebevorrichtung sind also der Hubbalg und der zur Kraftübertragung auf die Achse erforderliche Halter etwa in Achshöhe neben der Achse angeordnet, wo ausreichender Bauraum zur Verfügung steht. Dabei kann gleichzeitig erreicht werden, daß bei Vorlaufachsen keine störenden Teile in den Bereich der Kardanwelle hineinragen. Die erfindungsgemäße Achsanhebevorrichtung ist hinsichtlich ihrer Einsetzbarkeit also weitestgehend unabhängig von der Konstruktion des Fahrzeugrahmens und der Kardanwellenanordnung. Andererseits hat die Achsanhebevorrichtung auch einen ausreichenden Bodenabstand, da ihre Gesamthöhe etwa derjenigen der Achse entspricht. Die Achsanhebevorrichtung kann sowohl bei starren, als auch bei lenkbaren Vorlauf- oder Schleppachsen zum Einsatz kommen.

Bei einer bevorzugten Ausführungsform ist jeder Hubbalg mit einer senkrecht zur Fahrbahn geführten Druckplatte gegen mindestens einen Halter drückbar. Durch diese Zwangsführung wird erreicht, daß sich der Hubbalg in reproduzierbarer Weise verformt, so daß er keiner Befestigung an den Haltern der Achse bedarf.

Hierzu können zwei Lenker vorgesehen sein, welche parallel zueinander angeordnet sind, die gleiche Länge aufweisen, einenends an spiegelsymmetrisch zu einer durch den jeweiligen Hubbalg verlaufenden Querschnittsebene angeordneten Lagern der Druckplatte und anderenends am Fahrzeugrahmen gelagert sind, wobei die Lagerachsen parallel zu der vorgenannten Querschnittsebene verlaufen. Durch den parallelen Verlauf der Lenker untereinander sowie der Lagerachsen untereinander und den durch spiegelsymmetrische Lagerung bedingten Versatz der Lenker in ihrer Längsausdehnungsrichtung wird eine parallele Führung der Druckplatte zur Fahrbahnebene gewährleistet. Dabei bewegen sich die druckplattenfesten Lagerstellen auf Kreisbögen um die fahrzeugrahmenseitigen Lagerstellen. Bei ausreichender Länge der Lenker bedeutet dies im Arbeitsbereich des Hubbalges eine praktisch senkrechte Bewegung der Druckplatte.

In weiterer Ausgestaltung ist der Hubbalg ein Faltenbalg mit zwischen den Falten den Hubbalg umschließenden, starren Führungsringen. Die Führungsringe gewährleisten, daß sich der Hubbalg beim Belüften gleichmäßig im Faltenbereich verformt und sich die Falten beim Entlüften geordnet aufeinanderlegen. Gleichzeitig erzwingt der Führungsring, daß sich der Hubbalg hauptsächlich in Axialrichtung und nur geringfügig in Querrichtung ausdehnt, so daß eine Belüftung überwiegend in einen Achsenhub umgesetzt wird.

Bei einer weiteren Ausgestaltung ist bei abgesenkter und nicht eingefederter Achse zwischen jedem Hubbalg und mindestens einem Halter ein Freiraum ausgebildet, der beim Belüften des Hubbalges geschlossen wird. Hierdurch wird der Faltenbalg des Hubbalges geschont.

Bei einer weiteren Ausgestaltung weist jeder Halter an seiner Unterseite einen Gummidämpfer für den sich beim Anheben der Achse anlegenden Hubbalg auf. Hierdurch wird einerseits ein stoßarmes Anheben der Achse begünstigt und andererseits ein weiches Auftreffen der Halter auf den Hubbalg bei einem übermäßigen Ausfedern der Achse gewährleistet.

Bei einer weiteren Ausgestaltung insbesondere für Nachlaufachsen von Lastkraftwagen und Sattelaufliegern oder für Achsen von Anhängern ist ein einziger Halter auf der Fahrzeugmittelachse angeordnet, was einen minimalen technischen Aufwand bedingt.

Bei einer anderen Ausgestaltung, insbesondere für Vorlaufachsen von Lastkraftwagen oder Sattelaufliegern ist die Achse im Mittelbereich zur Fahrbahn hin gekröpft, so daß eine Kardanwelle ungehindert durch den gekröpften Mittelbereich geführt werden kann, und es sind zwei Halter symmetrisch zur Fahrzeuglängsachse und von der Kardanwelle beabstandet angeordnet. Dies gewährleistet, daß die Kardanwelle auch beim Anheben der Achse nicht mit Teilen der Vorrichtung bzw. Achse kollidiert.

Die beiden Halter können mit zwei Hubbälgen beaufschlagt werden. Bevorzugt ist jedoch eine Ausführungsform mit einer beide Halter untergreifenden Druckplatte in Jochform, welche gegen die Halter drückbar ist. Mit dieser symmetrisch ausgebildeten Druckplatte ist auch eine Achse mit gekröpftem Mittelbereich und zwei Haltern gleichmäßig anhebbar, wobei nicht mehr als ein Hubbalg zur Anwendung kommt.

Bei einer weiteren Ausführungsform weisen jeder Halter mit seinem freien Ende zu den rahmenseitigen Lenkerlagern der Achse hin, und jeder Hubbalg ist zwischen Achse und rahmenseitigen Lenkerlagern angeordnet. Hierdurch wird erreicht, daß die Achse bei einem relativ geringen Hub des Hubbalges einen ausreichenden Bodenabstand gewinnt. Befindet sich nämlich der Hubbalg auf der den Luftfederbälgen zugeordneten Seite der Achse, so ist zur Gewinnung des gleichen Bodenabstandes ein größerer Hub des Hubbalges erforderlich, da hierzu die Halter einen größeren Kreisbogen um die Lenkerlager der Achse beschreiben müssen.

In weiterer Ausgestaltung sind die Lenkerlager der Achse in einem in Fahrzeugquerrichtung verlaufenden, fahrzeugrahmenfesten Träger angeordnet, und der Träger weist eine starr mit ihm verbundene und in Fahrzeuglängsrichtung von ihm abstehende Tragplatte auf, an der jeder Hubbalg abgestützt ist. Hierbei erfüllt der Träger neben der durch ihn bewirkten Erhöhung der Stabilität des Fahrzeugrahmens noch die Funktionen der Aufnahme der Lenkerlager der Achse und der Abstützung des Hubbalges.

Besonders vorteilhaft ist es, die Lagerung der Lenker der Druckplatte am Fahrzeugrahmen ebenfalls in dem in Fahrzeugquerrichtung verlaufenden Träger anzuordnen, so daß der Träger noch eine zusätzliche Funktion als Lagerträger ausübt. Gleichzeitig wird hierdurch erreicht, daß die Auflagepunkte der Druckplatte und der Halter beim Anheben der Achse praktisch unverändert bleiben, da die Bewegungsradien der Druckplatte und der achsfesten Halter praktisch übereinstimmen.

Bei eine weiteren Ausgestaltung hat jeder Hubbalg eine Tragplatte, eine Druckplatte und einen Faltenbalg, wobei der Faltenbalg an stirnseitigen Randwulsten von mit der Tragplatte bzw. der Druckplatte verschraubten Halteringen dichtend gegen die Tragplatte bzw. die Druckplatte gedrückt wird. Die Tragplatte kann — wie bereits vorstehend beschrieben — eine starr mit dem Träger verbundene Tragplatte sein. Die Druckplatte kann auch die vorstehend beschriebene jochförmige Druckplatte sein und direkt gegen die achsfesten Halter drücken. Der beschriebene Aufbau ist besonders einfach.

Bei einer weiteren Ausgestaltung hat jeder Hubbalg zwischen Tragplatte bzw. Druckplatte einen Gummipuffer, der den Faltenbalg vor einer möglichen Zerstörung beim Zusammendrücken von Tragplatte bzw. Druckplatte schützt.

In den Zeichnungen zeigen :

Fig. 1   eine luftgefederte Vorlaufachse mit Achsanhebevorrichtung in einem Lastkraftwagen im abgesenkten Zustand ;

Fig. 2   dieselbe Vorlaufachse im angehobenen Zustand ;

Fig. 3   Achsanhebevorrichtung derselben Vorlaufachse mit gekröpfter Achse in vergrößerter Darstellung und entlang der Fahrzeugmittelachse geschnitten ;

Fig. 4   dieselbe Achsanhebevorrichtung in der Draufsicht ;

Fig. 5   Träger und Hubbalg derselben Achsanhebevorrichtung in vergrößerter Darstellung und in Fahrtrichtung gesehen ;

Fig. 6   derselbe Träger mit Hubbalg in der Draufsicht ;

Fig. 7   derselbe Träger mit Hubbalg in einer vergrößerten Schnittdarstellung gemäß Linie VII-VII der Fig. 6 ;

Fig. 8   Achsanhebevorrichtung mit ungekröpfter Achse in einem Schnitt entlang der Fahrzeugmittelachse;

Fig. 9   dieselbe Achsanhebevorrichtung in der Draufsicht ;

Fig. 10  Träger und Hubbalg derselben Achsanhebevorrichtung in vergrößerter Darstellung und in Fahrtrichtung gesehen ;

Fig. 11  derselbe Träger und Hubbalg in der Draufsicht.

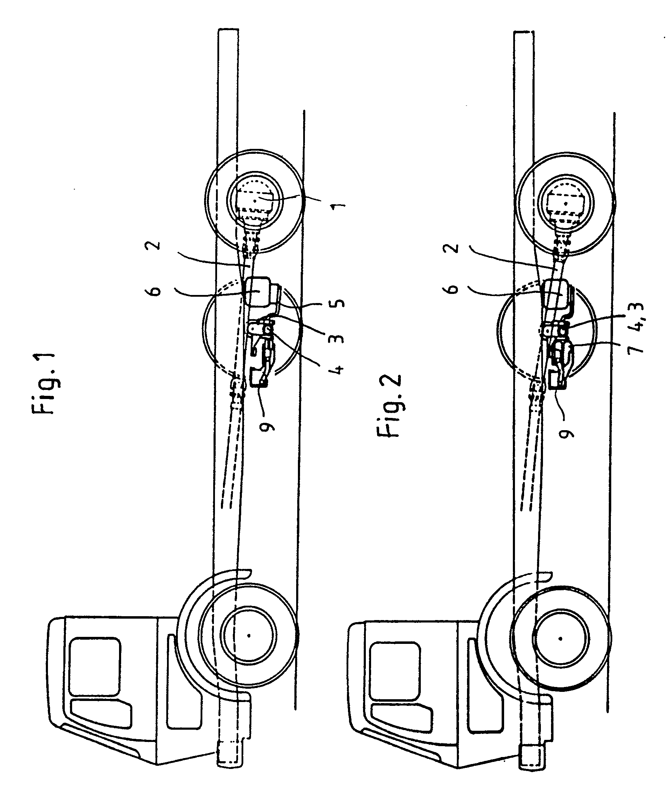

Die Fig. 1 zeigt einen Lastkraftwagen, dessen Hinterachse 1 von einer Kardanwelle 2 angetrieben wird. Der Lastkraftwagen hat ferner eine Vorlaufachse 3, die in ihrem Mittelbereich 4 zur Aufnahme der Kardanwelle 2 gekröpft ist. Die Vorlaufachse 3 ist mit einer Achsanhebevorrichtung ausgerüstet, die sich im abgesenkten Zustand befindet. Dabei wird die Vorlaufachse 3 über Achslenker 5 und Luftfedern 6 gefedert.

Die Fig. 2 zeigt die Vorlaufachse im angehobenen Zustand, in dem die Luftfedern 6 entlüftet sind und ein Hubbalg 7 der Achsanhebevorrichtung belüftet ist. Die Kardanwelle 2 ist unbehindert durch den Mittelbereich 4 der Vorlaufachse 3 geführt.

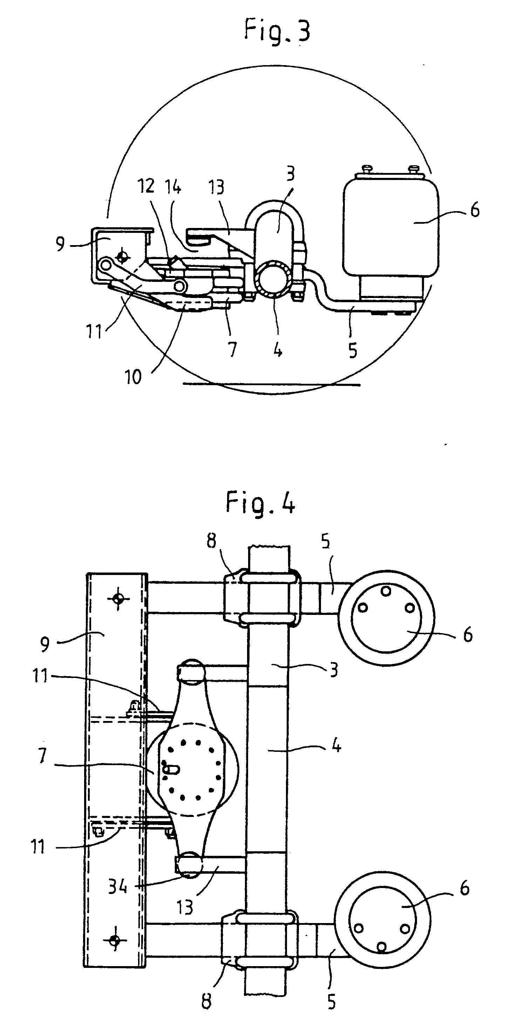

Die Kröpfung der Vorlaufachse 3 in ihrem Mittelbereich 4 und der Aufbau der Achsanhebevorrichtung ist besser aus den Fig. 3 und 4 ersichtlich. Die Achse 3 ist seitlich mittels Schellen 8 auf den Achslenkern 5 befestigt. Die Achslenker 5 sind wiederum einenends an Luftfedern 6 abgestützt, die sich in den Fig. 3 und 4 in belüftetem Zustand befinden. Die Achslenker der Luftfederung sind anderenends in einem einteiligen, durchgehenden Träger 9 gelagert, dessen Längsachse in Fahrzeugquerrichtung verläuft. Der Träger 9 kann über Konsolen mit dem Fahrzeugrahmen verbunden sein.

Zwischen dem Träger 9 und der Vorlaufachse 3 befinden sich die Komponenten der Achsanhebevorrichtung. Diese werden gebildet von einer starr mit dem Träger und somit dem Fahrzeugrahmen verbundenen Tragplatte 10, die gleichzeitig Bestandteil des Hubbalges 7 ist, einer durch Lenker 11 parallel geführten Druckplatte 12, die ebenfalls Bestandteil des Hubbalges 7 ist und von Haltern 13, die neben dem Mittelbereich 4 starr mit der Vorlaufachse 3 verbunden sind.

Bei abgesenkter Vorlaufachse 3 ist ein Freiraum 14 zwischen der jochförmigen Druckplatte 12 und den freien Enden der Halter 13 ausgebildet, so daß die Vorlaufachse ungehindert ausfedern kann. Durch Belüften des Hubbalges 7 wird der Freiraum 14 zwischen Haltern 13 und Druckplatte 12 geschlossen und anschließend die Vorlaufachse 3 angehoben. Zweckmäßigerweise werden vor dem Anheben der Vorlaufachse 3 die Luftfedern 6 entlüftet.

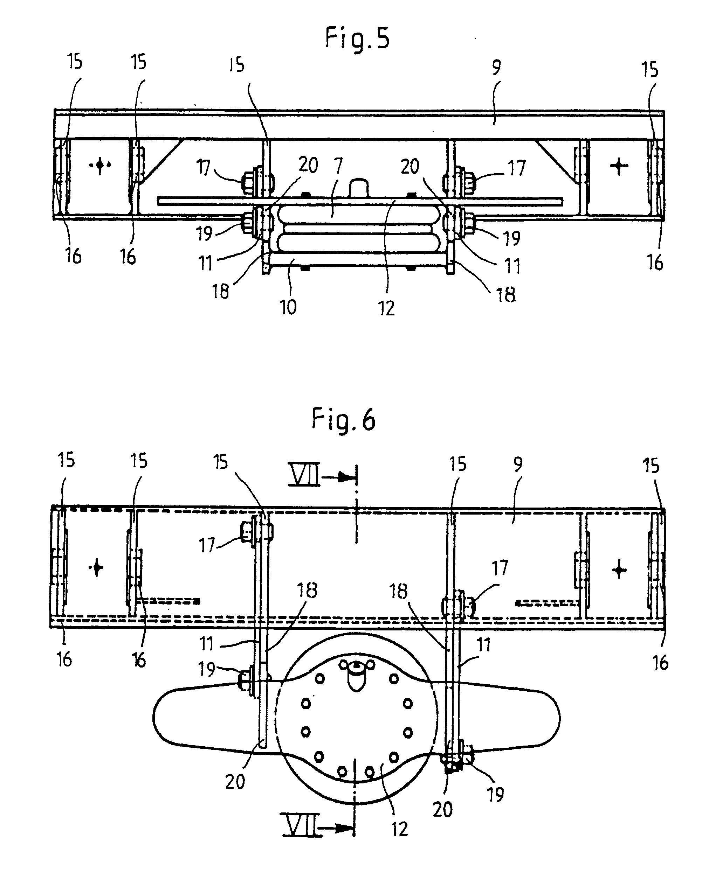

Anhand der Fig. 5 und 6 werden nachfolgend weitere Einzelheiten der Konstruktion erläutert. Der Träger 9 hat ein Kastenprofil mit aus Stabilitätsgründen und zur Lagerung der Achslenker und Lenker eingezogenen Wänden 15. Die Achslenker 5 werden in eingesetzten Lagerbuchsen 16 der beiden seitlichen Wände 15 gelagert. Für die Lenker 11 der Druckplatte 12 sind in den mittleren Wänden 15 des Trägers 9 Bolzenlagerungen 17 vorgesehen.

Die Druckplatte 12 und die Tragplatte 10 sind Bestandteile des Hubbalges 7. Die Tragplatte 10 ist über auskragende Fortsetzungen 18 der mittleren Wände 15 fest mit dem Träger verschweißt. Die Lenker 11 sind mittels weiterer Bolzenlagerungen 19 an angeschweißte Lagerplatten 20 der jochförmigen Druckplatte 12 angelenkt.

Die Bolzenlagerungen 19 sind spiegelsymmetrisch zu einer durch den Hubbalg in Fahrzeugquerrichtung verlaufenden Querschnittsebene angeordnet. Die Lenker 11 weisen die gleiche Länge auf und verlaufen parallel, so daß die Bolzenlagerungen 17 ebenfalls versetzt angeordnet sind. Gemeinsam mit dem parallelen Achsverlauf der Bolzenlagerungen 17 und 19 bedingt dies, daß die Druckplatte 12 parallel zur Fahrbahnebene geführt wird. Dies bedeutet ferner im Schwenkbereich der Druckplatte 12 eine praktisch senkrechte Bewegung.

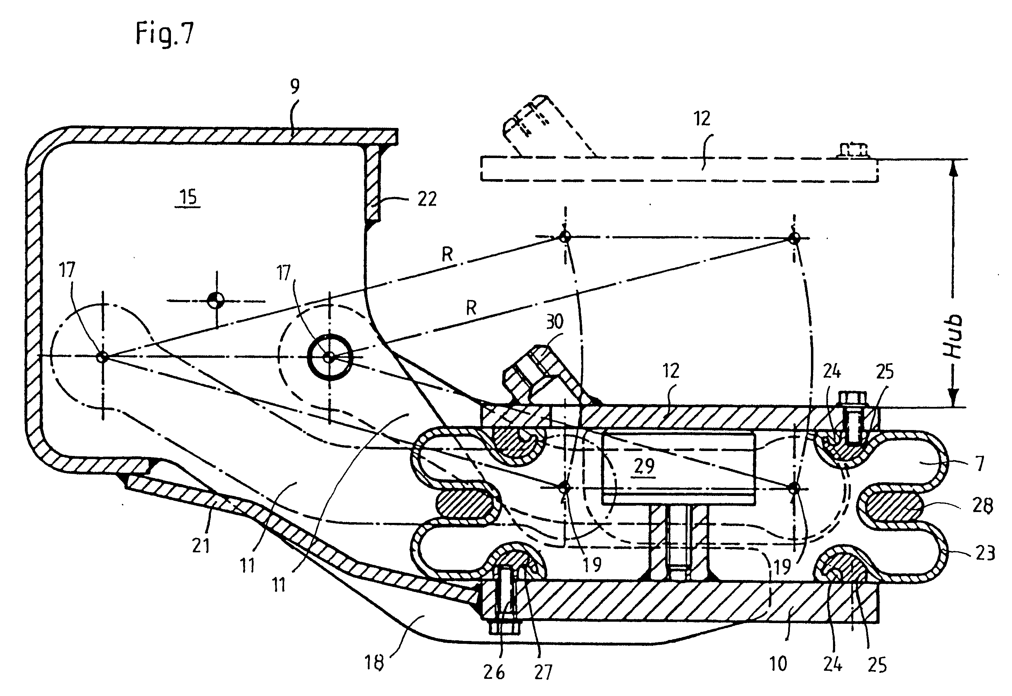

Einzelheiten der Abstützung, der Führung und des Aufbaues des Hubbalges können besser anhand der Fig. 7 erläutert werden. Die Wand 15 des Trägers 9 kragt mit ihrer Fortsetzung 18 seitlich aus dem Träger 9 heraus. Die Fortsetzung 18 ist mit der Tragplatte 10 des Hubbalges verschweißt. Zwischen Träger 9 und Tragplatte 10 ist ferner ein Schutzblech 21 vorgesehen, welches insbesondere den Hubbalg 7 vor Beschädigungen durch von der Fahrbahn aufgewirbelte Steine schützt.

Die Druckplatte 12 des Hubbalges 7 ist über die gestrichelt eingezeichneten Lenker 11 an dem Träger 9 gelagert. Die Bolzenlagerungen 19 der Lenker 11 sind auf Radien R um die trägerseitigen Bolzenlagerungen 17 der Lenker 11 schwenkbar. Durch den gekrümmten Verlauf der Lenker 11 ist die Druckplatte 12 gegenüber dem Träger 9 tief absenkbar und kann der Träger 9 außerdem mit einer die Stabilität erhöhenden vorderen Abschlußwand 22 versehen werden. Im Bereich des maximalen Hubes der Druckplatte zwischen der ausgezogen dargestellten Lage und der gestrichelt eingezeichneten Lage bewegt sich die Druckplatte 12 annähernd senkrecht.

Der Hubbalg 7 hat einen Faltenbalg 23, der an Randwulsten 24 zwischen Halteringen 25 und der Tragplatte 10 bzw. der Druckplatte 12 dichtend verspannt ist. Zum Verspannen des Randwulstes 24 sind in die Tragplatte 10 bzw. die Druckplatte 12 Schrauben 26 eingesetzt, die in Gewindebohrungen der Halteringe 25 eingreifen. Außerdem weisen die Halteringe 25 eine Haltenut 27 für den Randwulst 24 auf.

Der Faltenbalg 23 ist als Zweifaltenbalg ausgebildet und weist zwischen den beiden Falten einen Führungsring 28 auf. Ferner ist zwischen Tragplatte 10 und Druckplatte 12 des Hubbalges 7 ein Gummipuffer 29 vorgesehen, der den Faltenbalg 23 vor Beschädigungen schützt. Zur Be- und Entlüftung des Hubbalges 7 trägt die Druckplatte 12 einen Luftanschlußstutzen 30.

Bei der erfindungsgemäßen Achsanhebevorrichtung ist die Unterkante etwa so hoch angeordnet, daß die Bodenfreiheit im Bereich der Achsanhebevorrichtung ungefähr der der Triebachse oder dem luftfederseitigen Ende der Achslenker entspricht. Außerdem ist im Bereich des Hubes der Druckplatte 12 eine Kollision mit der Kardanwelle nicht zu besorgen.

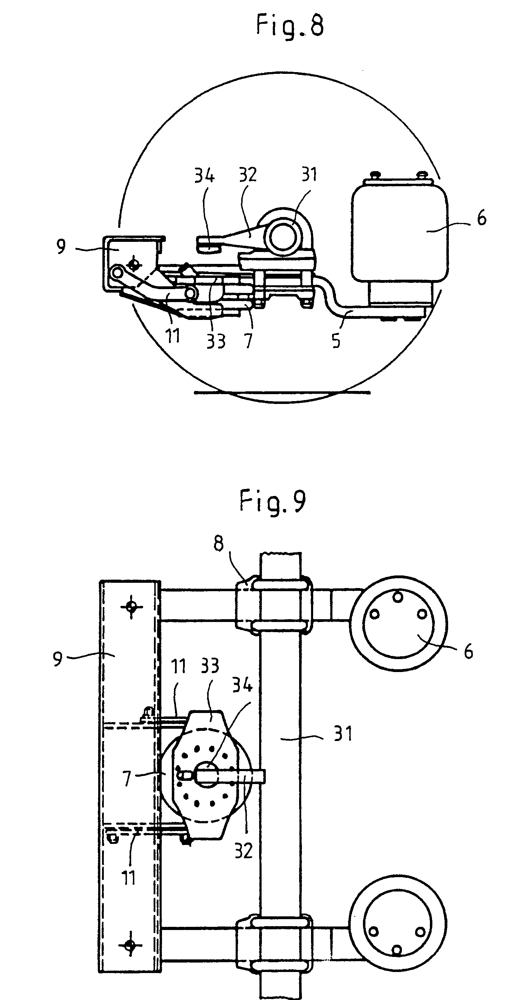

Die in den Fig. 8 und 9 dargestellte Ausführungsform kommt vorzugsweise bei Achsen zum Einsatz, die nicht unterhalb der Kardanwelle angeordnet werden. Dies ist besonders bei Nachlaufachsen oder Anhängerachsen der Fall. Unter diesen Voraussetzungen kann eine ungekröpfte Achse 31 auch mit einem entlang der Fahrzeugmittelachse verlaufenden Halter 32 versehen sein. Der Halter 32 arbeitet mit einer Druckplatte 33

4

zusammen, die zur Befestigung von Lagerplatten für Lenker 11 eine verkürzte Jochform hat.

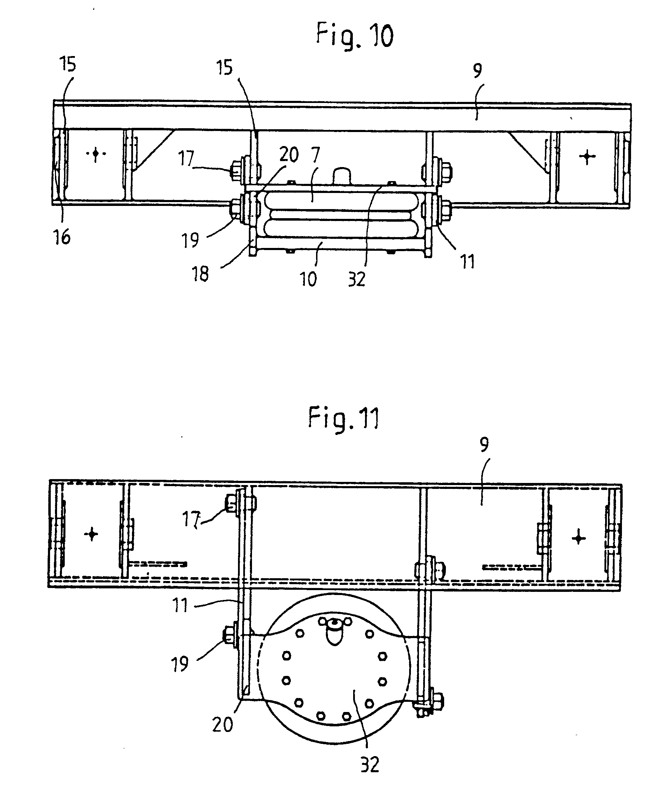

Im übrigen entspricht der Aufbau dieser Achsanhebevorrichtung der in den Fig. 1 bis 7 dargestellten, worauf in den Fig. 8 bis 11 durch Verwendung übereinstimmender Bezugsziffern für die wesentlichen Teile und ohne weitere Erläuterung hingewiesen wird. Insoweit wird auf die einschlägigen Erläuterungen zu den Fig. 1 bis 7 Bezug genommen.

Zu den Fig. 3 und 4 sowie 8 und 9 sei noch ergänzt, daß die Halter 13 bzw. 32 an ihren freien Enden Gummidämpfer 34 aufweisen, die ein stoßarmes Aufsetzen der Druckplatte begünstigen.

### Bezugszeichenliste

| 1 | Hinterachse |
|---|---|
| 2 | Kardanwelle |
| 3 | Vorlaufachse |
| 4 | Mittelbereich |
| 5 | Achslenker |
| 6 | Luftfeder |
| 7 | Hubbalg |
| 8 | Schelle |
| 9 | Träger |
| 10 | Tragplatte |
| 11 | Lenker |
| 12 | Druckplatte |
| 13 | Halter |
| 14 | Freiraum |
| 15 | Wand |
| 16 | Lagerbuchse |
| 17 | Bolzenlagerung |
| 18 | Fortsetzung |
| 19 | Bolzenlagerung |
| 20 | Lagerplatte |
| 21 | Schutzblech |
| 22 | Abschlußwand |
| 23 | Faltenbalg |
| 24 | Randwulst |
| 25 | Haltering |
| 26 | Schraube |
| 27 | Haltenut |
| 28 | Führungsring |
| 29 | Gummipuffer |
| 30 | Luftanschlußstutzen |
| 31 | Achse |
| 32 | Halter |
| 33 | Druckplatte |
| 34 | Gummidämpfer |
| R | Radius |

### Patentansprüche

1. Achsanhebevorrichtung für luftgefederte Achsen (3 ; 31) von Lastkraftwagen, Sattelaufliegern oder Anhängern, mit mindestens einem Hubbalg (7), der einenends am Fahrzeugrahmen abgestützt ist und anderenends mit der Achse (3 ; 31) zusammenwirkt, wobei die Achse (3 ; 31) mindestens einen starr mit ihr verbundenen und in Fahrzeuglängsrichtung von der Achse (3 ; 31) abstehenden Halter (13 ; 32) aufweist, wobei jeder Hubbalg (7) zum Anheben der Achse (3, 31) gegen die der Fahrbahn zugewandte Unterseite mindestens eines Halters (13 ; 32) abgestützt wird, und wobei jeder Hubbalg (7) mit einer senkrecht zur Fahrbahn geführten Druckplatte (12, 33) gegen mindestens einen Halter (13 ; 32) drückbar ist, **dadurch gekennzeichnet**, daß die Druckplatte (12 ; 33) jedes Hubbalges (7) mittels zwei Lenkern (11) senkrecht zur Fahrbahn geführt ist, wobei

5

EP 0 332 037 B1

die Lenker (11) parallel zueinander angeordnet sind, die gleiche Länge aufweisen, einenends an spiegelsymmetrisch zu einer durch den Hubbalg (7) verlaufenden Querschnittsebene angeordneten Lagern der Druckplatte (12 ; 33), anderenends am Fahrzeugrahmen gelagert sind, wobei die Lagerachsen parallel zur Querschnittsebene verlaufen.

2. Achsanhebevorrichtung nach Anspruch 1, dadurch gekennzeichnet, daß jeder Hubbalg (7) einen Faltenbalg (23) mit zwischen den Falten den Faltenbalg (23) umschließenden, starren Führungsringen (28) hat.

3. Achsanhebevorrichtung nach einem der Ansprüche 1 und 2, dadurch gekennzeichnet, daß bei abgesenkter und nicht eingefederter Achse (3, 31) zwischen jedem Hubbalg (7) und mindestens einem Halter (13, 32) ein Freiraum (14) ausgebildet ist, der beim Belüften des Hubbalges (7) geschlossen wird.

4. Achsanhebevorrichtung nach einem der Ansprüche 1 bis 3, dadurch gekennzeichnet, daß jeder Halter (13, 32) an seiner Unterseite einen Gummidämpfer (34) für den sich beim Anheben der Achse (3 ; 31) anlegenden Hubbalg (7) aufweist.

5. Achsanhebevorrichtung nach einem der Ansprüche 1 bis 4, insbesondere für Nachlaufachsen von Lastkraftwagen und Satteiaufliegern oder für Achsen (31) von Anhängern, dadurch gekennzeichnet, daß ein einziger Halter (32) auf der Fahrzeugmittelachse angeordnet ist.

6. Achsanhebevorrichtung nach einem der Ansprüche 1 bis 5, insbesondere für Vorlaufachsen (3) von Lastkraftwagen oder Sattelaufliegern, dadurch gekennzeichnet, daß die Achse (3) im Mittelbereich (4) zur Fahrbahn hin gekröpft ist, so daß eine Kardanwelle unbehindert durch den gekröpften Mittelbereich (4) geführt werden kann und daß zwei Halter (13) symmetrisch zur Fahrzeugmittelachse und von der Kardanwelle (2) beabstandet angeordnet sind.

7. Achsanhebevorrichtung nach Anspruch 6, dadurch gekennzeichnet, daß ein einzelner Hubbalg (7) vorgesehen ist, der mit einer beide Halter (13) untergreifenden Druckplatte (12) in Jochform gegen die Halter (13) wirkt.

8. Achsanhebevorrichtung nach einem der Ansprüche 1 bis 7, dadurch gekennzeichnet, daß jeder Halter (13, 32) mit seinem freien Ende zu rahmenseitigen Lenkarlagern (16) der Achse (3, 31) hinweist und jeder Hubbalg (7) zwischen Achse (3, 31) und rahmenseitigen Lenkerlagern (16) angeordnet ist.

9. Achsanhebevorrichtung nach einem der Ansprüche 1 bis 8, dadurch gekennzeichnet, daß die Lenkerlager (16) der Achse (3, 31) in einem in Fahrzeugquerrichtung verlaufenden, fahrzeugrahmenfesten Träger (9) angeordnet sind, und daß der Träger (9) ein starr mit ihm verbundene und in Fahrzeuglängsrichtung von ihm abstehende Tragplatte (10) aufweist, an der jeder Hubbalg (7) abgestützt ist.

10. Achsanhebevorrichtung nach Anspruch 1 in Verbindung mit Anspruch 9, dadurch gekennzeichnet, daß die Lagerung (17) der Lenker (11) der Druckplatte (12, 33) am Fahrzeugrahmen ebenfalls in dem in Fahrzeugquerrichtung verlaufenden Träger (9) angeordnet ist.

11. Achsanhebevorrichtung nach einem der Ansprüche 1 bis 10, dadurch gekennzeichnet, daß jeder Hubbalg (7) eine Tragplatte (10), eine Druckplatte (12) und einen Faltenbalg (23) hat, wobei der Faltenbalg (23) an stirnseitigen Randwulsten (24) von mit der Tragplatte (10) bzw. der Druckplatte (12) verschraubten Halteringen (25) dichtend gegen die Tragplatte (10) bzw. die Druckplatte (12) gedrückt wird.

12. Achsanhebevorrichtung nach Anspruch 11, dadurch gekennzeichnet, daß jeder Hubbalg (7) zwischen Tragplatte (10) und Druckplatte (12) einen Gummipuffer (29) aufweist, der den Faltenbalg (23) vor einer möglichen Zerstörung beim Zusammendrücken von Tragplatte (10) und Druckplatte (12) schützt.

## Claims

1. An axle lifting mechanism for pneumatically suspended axles (3 ; 31) of lorries, semi-trailers or trailers, comprising at least one lifting bellows (7), one end of which is supported on the vehicle fame and the other end of which co-operates with the axle (3 ; 31), the axle (3 ; 31) comprising at least one holder (13 ; 32) rigidly connected thereto and projecting from the axle (3 ; 31) in the longitudinal direction of the vehicle, each lifting bellows (7) being supported, for the purpose of lifting the axle (3, 31), against the underside of at least one holder (13, 32), such underside facing the roadway, and each lifting bellows (7) being pressable against at least one holder (13 ; 32) by a pressure plate (12, 33) guided at right angles to the roadway, characterised in that the pressure plate (12 ; 33) of each lifting bellows (7) is guided at right angles to the roadway by means of two links (11), the links (11) being arranged parallel to one another, having the same length, being mounted at one end on bearings of the pressure plate (12, 33) disposed in mirror-image symmetry to a cross-sectional plane extending through the lifting bellows (7), while the other ends of the links are mounted on the vehicle frame, the bearing axes extending parallel to the cross-sectional plane.

2. An axle lifting mechanism according to claim 1, characterised in that each lifting bellows (7) comprises a concertina-type bellows (23) having rigid guide rings (28) enclosing the concertina-type bellows (23) between

6

the concertina-folds.

3. An axle lifting mechanism according to claim 1 or 2, characterised in that when the axle (3, 31) is lowered and its suspension not deflected a free space (14) is formed between each lifting bellows (7) and at least one holder (13, 32), such free space being closed when air is applied to the lifting bellows (7).

4. An axle lifting mechanism according to any of claims 1 to 3, characterised in that each holder (13, 32) has at its underside a rubber damper (34) for the lifting bellows (7) which comes into contact when the axle (3; 31) is lifted.

5. An axle lifting mechanism according to any one of claims 1 to 4, more particularly for trailing axles of lorries and semi-trailers or for axles (41) of trailers, characterised in that a single holder (32) is disposed on the vehicle centre-line.

6. An axle lifting mechanism according to any one of claims 1 to 5, more particularly for leading axles (3) of lorries or semi-trailers, characterised in that the axle (3) is cranked towards the roadway in the central zone (4) so that a cardan shaft can without obstruction pass through the cranked central zone (4) and in that two holders (13) are disposed spaced from the cardan shaft (2) and symmetrically with respect to the vehicle centre-line.

7. An axle lifting mechanism according to claim 6, characterised in that a single lifting bellows (7) is provided which acts in the form of a yoke against the holders (13) by a pressure plate (12) engaging beneath the two holders (13).

8. An axle lifting mechanism according to any one of claims 1 to 7, characterised in that each holder (13, 32) points with its free end towards the frame-side link bearings (16) of the axle (3, 31) and each lifting bellows (7) is disposed between the axle (3, 31) and the frame-side link bearings (16).

9. An axle lifting mechanism according to any one of claims 1 to 8, characterised in that the link bearings (16) of the axle (3, 31) are disposed in a member (9) which is fixed to the vehicle frame and extends in the transverse direction of the vehicle, and in that the member (9) comprises a support plate (10) projecting therefrom in the longitudinal direction of the vehicle and rigidly connected thereto, each lifting bellows (7) being supported on said support plate (10).

10. An axle lifting mechanism according to claim 1 in conjunction with claim 9, characterised in that the mounting (17) for the links (11) of the pressure plate (12, 33) on the vehicle frame is also disposed in the member (9) extending in the transverse direction of the vehicle.

11. An axle lifting mechanism according to any one of claims 1 to 10, characterised in that each lifting bellows (7) has a support plate (10), a pressure plate (12) and a concertina-type bellows (23), the latter being pressed sealingly against the support plate (10) and the pressure plate (12) at end-face edge beads (24) of holder rings (25) screw-connected to the support plate (10) and to the pressure plate (12).

12. An axle lifting mechanism according to claim 11, characterised in that each lifting bellows (7) has a rubber buffer (29) between the support plate (10) and the pressure plate (12), such rubber buffer protecting the concertina-type bellows (23) from any possible destruction on compression of the support plate (10) and pressure plate (12).

## Revendications

1. Dispositif de relevage d'essieu pour essieux à suspension pneumatique (3 ; 31) de camions, semi-remorques ou remorques, comportant au moins un vérin de relevage à soufflet (7) qui, à l'une de ses extrémités, s'appuie sur le châssis du véhicule, et qui, à l'autre extrémité coopère avec l'essieu (3 ; 31), l'essieu (3 ; 31) comportant au moins un support d'appui (13 ; 32) qui lui est relié de manière rigide et qui est en porte-à-faux de l'essieu (3 ; 31), dans la direction longitudinale du véhicule, chaque vérin de relevage à soufflet (7) étant susceptible d'être appliqué contre au moins un support d'appui (13 ; 32) par l'intermédiaire d'une plaque de pression (12 ; 33) guidée perpendiculairement à la chaussée, caractérisé en ce que la plaque de pression (12; 33) de chaque vérin de relevage à soufflet (7) est guidée perpendiculairement à la chaussée au moyen de deux biellettes (11), ces biellettes (11) étant disposées parallèlement entre-elles, présentent la même longueur et sont montées, à l'une de leurs extrémités, dans des paliers de la plaque de pression (12 ; 33) disposés symétriquement par rapport à un plan de section de direction transversale s'étendant au travers du vérin de relevage à soufflet (7), et, à l'autre de leurs extrémités, dans des paliers sur le châssis du véhicule, les axes de paliers s'étendant parallèlement au plan de section de direction transversale.

2. Dispositif de relevage d'essieu selon la revendication 1, caractérisé en ce que chaque vérin de relevage à soufflet (7) comporte un soufflet (23) présentant entre les plis, des anneaux de guidage rigides (28) entourant le soufflet (23).

3. Dispositif de relevage d'essieu selon l'une des revendications 1 et 2, caractérisé en ce que lorsque l'essieu (3 ; 31) est abaissé et sa suspension non enfoncée, un espace libre (14) est formé entre chaque vérin de relevage à soufflet (7) et au moins un support d'appui (13, 32), et est résorbé lors du gonflement du vérin de relevage à soufflet (7).

4. Dispositif de relevage d'essieu selon l'une des revendications 1 à 3, caractérisé en ce que chaque support d'appui (13 ; 32) comporte sur sa face inférieure, un amortisseur en caoutchouc (34) destiné au vérin de relevage à soufflet (7) qui vient s'y appuyer lors du relevage de l'essieu (3 ; 31).

5. Dispositif de relevage d'essieu selon l'une des revendications 1 à 4, notamment destiné à des essieux traînés arrière de camions ou de semi-remorques, ou des essieux (31) de remorques, caractérisé en ce qu'un seul support d'appui (32) est disposé sur l'axe central du véhicule.

6. Dispositif de relevage d'essieu selon l'une des revendications 1 à 5, notamment destiné à des essieux traînés avant (3) de camions et de semi-remorques, caractérisé en ce que l'essieu (3) est coudé en direction de la chaussée, dans la zone centrale, de manière à ce qu'un arbre de transmission puisse passer sans entraves au travers de la partie centrale coudée (4), et en ce que deux supports d'appui (13) sont disposés symétriquement par rapport à l'axe longitudinal du véhicule, à distance de l'arbre de transmission (2).

7. Dispositif de relevage d'essieu selon la revendication 6, caractérisé en ce qu'il est prévu un seul vérin de relevage à soufflet (7) qui agit sur les supports d'appui (13), par l'intermédiaire d'une plaque de pression (12) en forme de travée s'engageant sous les deux supports d'appui (13).

8. Dispositif de relevage d'essieu selon l'une des revendications 1 à 7, caractérisé en ce que chaque support d'appui (13, 32) s'étend, avec son extrémité libre, en direction de paliers de bras oscillants (16) de l'essieu (3 ; 31), situés côté châssis, et en ce que chaque vérin de relevage à soufflet (7) est disposé entre l'essieu (3; 31) et des paliers de bras oscillants (16), situés côté châssis.

9. Dispositif de relevage d'essieu selon l'une des revendications 1 à 8, caractérisé en ce que les paliers de bras oscillants (16) de l'essieu (3 ; 31) sont disposés sur une traverse-support (9) fixe avec le châssis du véhicule et s'étendant en direction transversale du véhicule, et en ce que la traverse-support (9) comporte une plaque-support (10) qui lui est reliée de manière rigide et qui est en porte-à-faux de cette traverse-support, dans la direction longitudinale du véhicule, et sur laquelle s'appuie chaque vérin de relevage à soufflet (7).

10. Dispositif de relevage d'essieu selon la revendication 1 en combinaison avec la revendication 9, caractérisé en ce que les paliers (17) de montage sur le châssis, des biellettes (11) de la plaque de pression (12, 33), sont également disposés sur la traverse-support (9) s'étendant en direction transversale du véhicule.

11. Dispositif de relevage d'essieu selon l'une des revendications 1 à 10, caractérisé en ce que chaque vérin de relevage à soufflet (7) possède une plaque-support (10), une plaque de pression (12) et un soufflet (23), le soufflet (23) étant appliqué de manière étanche, au niveau de bourrelets de bordure frontaux (24), contre la plaque-support (10) et la plaque de pression (12), par des anneaux de fixation (25) vissés sur la plaque-support (10) et la plaque de pression (12).

12. Dispositif de relevage d'essieu selon la revendication 11, caractérisé en ce que chaque vérin de relevage à soufflet (7) possède, entre la plaque-support (10) et la plaque de pression (12), un tampon amortisseur en caoutchouc (29) qui protège le soufflet (23) contre une éventuelle détérioration lors de l'écrasement du vérin de relevage à soufflet et donc du rapprochement de la plaque-support (10) et de la plaque de pression (12).

Fig. 1

Fig. 2

EP 0 332 037 B1

## Fig. 3

## Fig. 4

Fig.5

Fig.6

Fig.7

EP 0 332 037 B1

## Fig. 8

## Fig. 9

## Fig. 10

## Fig. 11